# EUROPÄISCHE PATENTSCHRIFT

(11) **EP 3 126 178 B1**
(45) Veröffentlichungstag und Bekanntmachung des Hinweises auf die Patenterteilung: **26.09.2018**
(21) Anmeldenummer: 15708525.9
(22) Anmeldetag: 10.03.2015
(51) Int. Cl.: B60K 35/00, B60Q 1/26, G02B 6/00, B60Q 3/00, B60J 1/08, G02B 27/01, G09F 21/04

(54) **VORRICHTUNG ZUR AUSGABE EINER OPTISCHEN INFORMATION AN EINEM KRAFTFAHRZEUG**
DEVICE FOR OUTPUTTING VISUAL INFORMATION IN A MOTOR VEHICLE
DISPOSITIF D'ÉMISSION D'UNE INFORMATION OPTIQUE SUR UN VÉHICULE AUTOMOBILE

(30) Priorität: 31.03.2014 DE 102014205993
(43) Veröffentlichungstag der Anmeldung: 08.02.2017
(73) Patentinhaber: Bayerische Motoren Werke Aktiengesellschaft, 80809 München (DE)
(72) Erfinder: SCHREIER, Peter, 80993 München (DE); SEIFRIED, Reinhard, 82008 Unterhaching (DE)
(86) Internationale Anmeldenummer: PCT/EP2015/054876
(87) Internationale Veröffentlichungsnummer: WO 2015/150026

(56) Entgegenhaltungen:
- EP-A1- 1 832 472
- DE-A1- 3 532 120
- JP-A- H0 516 726
- US-A- 5 698 906
- US-A1- 2013 141 250

## Beschreibung

Die Erfindung betrifft eine Vorrichtung zur Ausgabe einer optischen Information an einem Kraftfahrzeug sowie ein entsprechendes Kraftfahrzeug.
Aus dem Stand der Technik ist es bekannt, den Zustand eines Kraftfahrzeugs, wie z.B. den verriegelten oder den entriegelten Zustand, über die Position eines mechanischen Türknopfs oder ggf. über kleine punktförmige Leuchtdioden im Innenraum des Fahrzeugs anzuzeigen. Diese visuelle Anzeige ist oftmals nur schwer erkennbar. Insbesondere ist die Position eines mechanischen Türknopfs bei Dunkelheit nicht sichtbar.
In den Dokumenten DE 10 2011 014 263 A1 sowie DE 10 2009 010 623 A1 werden Vorrichtungen zur Erzeugung von optischen Informationen in Fahrzeugscheiben beschrieben. Dabei wird über entsprechende Beleuchtungsvorrichtungen Licht in die Fahrzeugscheibe über deren Rand eingeleitet. Zur Anzeige der Informationen werden mehrere Lichtquellen verwendet, die am Rand der Scheibe angeordnet sind.
Die Druckschrift EP 1 832 472 A1 offenbart ein Kraftfahrzeug mit einer Scheibe und einem optischen Anzeigemittel mit den Merkmalen des Oberbegriffs des Anspruchs 1. Dabei ist die Scheibe in einem Abschnitt zum Zerstreuen des vom optischen Anzeigemittel ausgehenden Lichts ausgelegt.
Die Druckschrift US 2013/141250 A1 offenbart unter anderem die Anzeige von Symbolen in der Scheibe eines Kraftfahrzeugs durch die Beleuchtung der Scheibe mit einer Lichtquelle.
In dem Dokument JP H05 16726 A ist die Anbringung von Hologramm-Elementen an der Heckscheibe eines Kraftfahrzeugs beschrieben.
Die Druckschrift DE 35 32 120 A1 offenbart eine Windschutzscheibe für ein Kraftfahrzeug mit einer reflektierenden Einrichtung zur Sichtbarmachung von optischen Informationen oder Signalen im Sichtfeld der Windschutzscheibe. Als reflektierende Einrichtung wird dabei ein holographischer Spiegel genutzt.

In dem Dokument US 5,698,906 A ist ein Verriegelungssystem für ein Kraftfahrzeug mit einer holographischen Anzeige beschrieben. Hierfür sind holographische Aufkleber auf der Seitenscheibe des Kraftfahrzeugs aufgebracht. Zur Beleuchtung der holographischen Aufkleber wird das Licht von Leuchtelementen über Prismen in die Seitenscheibe eingekoppelt.

Aufgabe der Erfindung ist es, eine Vorrichtung zur Ausgabe einer optischen Information an einem Kraftfahrzeug zu schaffen, welche auf einfache Weise eine visuelle Wiedergabe von Informationen in einer Fahrzeugscheibe ermöglicht.

Diese Aufgabe wird durch die Vorrichtung gemäß Patentanspruch 1 gelöst. Weiterbildungen der Erfindung sind in den abhängigen Ansprüchen definiert.

Die erfindungsgemäße Vorrichtung dient zur Ausgabe einer optischen Information an einem Kraftfahrzeug, wobei das Kraftfahrzeug insbesondere ein PKW und ggf. auch ein LKW ist. Die Vorrichtung umfasst eine zur Anordnung im Innenraum des Kraftfahrzeugs vorgesehene Leuchteinrichtung mit einer oder mehreren Lichtquellen zur Erzeugung von Licht und eine den Innenraum des Kraftfahrzeugs begrenzende Fahrzeugscheibe mit einer zum Innenraum des Kraftfahrzeugs gerichteten Innenfläche und einer zur Außenseite des Kraftfahrzeugs gerichteten Außenfläche. Zwischen der Innenfläche und der Außenfläche erstreckt sich somit die Dicke der Scheibe, die durch einen entsprechenden Scheibenrand begrenzt ist. Je nach Ausgestaltung kann die Scheibe eine Seitenscheibe oder ggf. auch die Windschutzscheibe oder jede andere Fahrzeugscheibe im Kraftfahrzeug sein.

An der Scheibe des Kraftfahrzeugs (d.h. auf oder ggf. in der Scheibe) ist ein Symbol ausgebildet, das eine Struktur zur Lichtstreuung zumindest in den Innenraum des Kraftfahrzeugs aufweist. Die Struktur bewirkt somit, dass darauf fallendes Licht zumindest in den Innenraum des Fahrzeugs gestreut wird. Die Leuchteinrichtung der Vorrichtung und das Symbol sind dabei derart zueinander angeordnet, dass das Licht der Leuchteinrichtung in deren Betrieb zumindest zum Teil ausgehend vom Innenraum des Kraftfahrzeugs über die Innenfläche der Scheibe auf das Symbol fällt, welches aufgrund der Lichtstreuung an seiner Struktur aufleuchtet (d.h. visuell wahrnehmbar durch die Lichtstreuung erhellt wird). Unter dem Begriff des Lichts der Leuchteinrichtung ist das aus der Leuchteinrichtung austretende Licht zu verstehen, welches über die Lichtquelle bzw. Lichtquellen der Leuchteinrichtung erzeugt wird. Der Strahlengang des Lichts der Leuchteinrichtung erstreckt sich dabei von dem Lichtaustritt der Leuchteinrichtung auf die Innenfläche der Scheibe im Bereich der Position des Symbols und bewirkt hierdurch ein Aufleuchten desselben. Das Aufleuchten des Symbols entspricht der Ausgabe einer entsprechenden optischen Information.

Erfindungsgemäß ist die Scheibe des Kraftfahrzeugs eine Seitenscheibe in einer Tür des Kraftfahrzeugs. Die erfindungsgemäße Vorrichtung wird dabei insbesondere zur Anzeige des Verriegelungszustands bzw. Entriegelungszustands des Fahrzeugs genutzt und soll einen mechanischen Türknopf ersetzen. Demzufolge ist das Symbol vorzugsweise in einem Bereich der Scheibe angeordnet, an dem sich herkömmlicherweise ein Türknopf befindet.

Erfindungsgemäß ist die Leuchteinrichtung in einer Innenverkleidung einer Tür des Kraftfahrzeugs vorgesehen, wobei das Licht der Leuchteinrichtung über eine Öffnung in einer oberen Kante der Innenverkleidung aus der Leuchteinrichtung austritt. Hierdurch kann erreicht werden, dass das Licht durch Personen innerhalb und außerhalb des Fahrzeugs auch bei heruntergelassener Fahrzeugscheibe sichtbar ist und somit auch in diesem Fall die entsprechende optische Information vermittelt wird.

Die erfindungsgemäße Vorrichtung weist den Vorteil auf, dass auf einfache Weise mittels einer Beleuchtung eines Symbols über die Innenfläche der Scheibe dem Fahrer des Kraftfahrzeugs eine gut erkennbare optische Information vermittelt wird. Der Begriff des Symbols ist dabei weit zu verstehen und kann jede Art von Darstellung, insbesondere in der Form von Piktogrammen bzw. ggf. auch in der Form von Text, umfassen.

In einer besonders bevorzugten Variante umfasst die Leuchteinrichtung als Lichtquellen eine oder mehrere Halbleiterdioden, insbesondere eine oder mehrere LEDs. Gegebenenfalls können die Lichtquelle oder Lichtquellen auch Licht in mehreren Farben erzeugen. Hierzu können beispielsweise eine oder mehrere RGB-LEDs genutzt werden.

In einer besonders bevorzugten Ausführungsform zeigt die Vorrichtung bei deren Aktivierung eine oder mehrere Zustände des Kraftfahrzeugs über das Aufleuchten des Symbols an, wobei der oder die Zustände vorzugsweise den verriegelten Zustand und/oder den entriegelten Zustand des Kraftfahrzeugs umfassen. Unter einer Aktivierung der Vorrichtung ist dabei ein Vorgang zu verstehen, der das Einschalten der Lichtquelle(n) und hierdurch das Aufleuchten des Symbols umfasst. Dieser Vorgang kann ggf. ein Blinken des Symbols durch gepulste Ansteuerung der Lichtquellen umfassen.

In einer weiteren Variante werden unterschiedliche Zustände des Kraftfahrzeugs durch verschiedene Farben des Lichts der Lichtquelle oder Lichtquellen angezeigt. I nsbesondere kann der verriegelte Zustand des Kraftfahrzeugs durch ein Aufleuchten des Symbols in einer Farbe angezeigt werden, welche sich von der Farbe unterscheidet, in der das Symbol zur Anzeige des entriegelten Zustands des Fahrzeugs aufleuchtet.

In einer weiteren Ausgestaltung der erfindungsgemäßen Vorrichtung umfasst die Leuchteinrichtung eine optische Einrichtung, die das Licht der Lichtquelle oder Lichtquellen zumindest zum Teil auf das Symbol richtet. Vorzugsweise umfasst diese optische Einrichtung eine Kollimationsoptik zur Strahlbündelung zumindest eines Teils des Lichts der Lichtquelle oder Lichtquellen, insbesondere eine entsprechende Kollimationslinse. Alternativ oder zusätzlich kann ein Reflexionselement zur Ablenkung zumindest eines Teils des Lichts der Lichtquelle oder Lichtquellen hin zu dem Symbol mittels Reflexion vorgesehen sein. Dieses Reflexionselement wird vorzugsweise durch einen Lichtleiter gebildet, der über Totalreflexion an seiner Innenfläche das Licht der Lichtquelle oder Lichtquellen zumindest zum Teil hin zu dem Symbol ablenkt. Der Lichtleiter kann z.B. ein Prisma sein.

In einer weiteren Ausführungsform umfasst die Leuchteinrichtung eine Austrittsfläche, über die das Licht der Lichtquelle oder Lichtquellen zumindest zum Teil die Leuchteinrichtung verlässt, wobei die Austrittsfläche transparent und/oder lichtstreuend ist. Mittels seiner lichtstreuenden Austrittsfläche kann erreicht werden, dass das Symbol gleichmäßig ausgeleuchtet wird. Gegebenenfalls kann die Austrittsfläche transparent sein und dabei derart geformt sein, dass das hierüber austretende Licht der Lichtquelle oder Lichtquellen einen Lichtkegel mit im Wesentlichen homogener Lichtverteilung darstellt. Hierdurch werden Helligkeitsverluste durch Streuung vermieden.

In einer weiteren, besonders bevorzugten Ausführungsform bewirkt die Struktur des Symbols auch eine Lichtstreuung zur Außenseite des Kraftfahrzeugs. Hierdurch wird sichergestellt, dass das Symbol sowohl vom Innenraum des Kraftfahrzeugs als auch vom Außenraum sichtbar wird.

In einer weiteren Variante ist das Symbol auf der Innenfläche der Scheibe aufgebracht, wodurch eine Verschmutzung des Symbols durch Partikel aus der Fahrzeugumgebung vermieden wird.

In einer weiteren Ausgestaltung umfasst die Struktur des Symbols einen auf die Scheibe aufgebrachten Lack, der auf die Innenfläche oder die Außenfläche der Scheibe aufgebracht sein kann. Der Lack ist vorzugsweise transparent oder teiltransparent und umfasst insbesondere eine Mischung aus einem weißen und einem durchsichtigen Lack. Das Mischungsverhältnis zwischen weißem und durchsichtigem Lack ist vorzugsweise derart, dass der Anteil an weißem Lack zwischen 20 % und 80 % und entsprechend der Anteil an durchsichtigem Lack zwischen 80 % und 20 % liegt. Besonders praktikabel hat sich ein Mischungsverhältnis von 30 % weißem Lack und 70 % durchsichtigem Lack erwiesen. Entsprechende Lacke, welche eine Lichtstreuung bewirken, sind hinlänglich aus dem Stand der Technik bekannt. Vorzugsweise ist der Lack über Siebdruck auf die Scheibe aufgebracht.

Alternativ oder zusätzlich zur Verwendung eines Lacks kann die Struktur des Symbols ggf. durch Gravur und/oder Ätzen und/oder Sandstrahlen der Scheibe ausgebildet sein. Die Gravur bzw. das Ätzen bzw. das Sandstrahlen kann je nach Ausgestaltung auf der Innenfläche oder der Außenfläche der Scheibe erfolgen.

In einer weiteren Ausgestaltung der Erfindung ist ein Sensor zur Messung der Umgebungshelligkeit vorgesehen und die Lichtintensität des Lichts der Leuchteinrichtung wird in Abhängigkeit von der gemessenen Umgebungshelligkeit umso höher eingestellt, je größer die Umgebungshelligkeit ist. Auf diese Weise wird eine gute Sichtbarkeit des Symbols auch bei hellen Umgebungsbedingungen gewährleistet. Bei Dunkelheit wird dadurch eine von der Leuchteinrichtung bzw. dem Symbol ausgehende Blendung vermieden.

In einer weiteren Ausführungsform kann die Vorrichtung bei deren Aktivierung ein zeitweises Blinken des Symbols und/oder ein zeitweises durchgängiges Leuchten des Symbols bewirken.

In einer bevorzugten Variante ist die Vorrichtung manuell durch einen Benutzer, insbesondere über einen Fahrzeugschlüssel und vorzugsweise einen Funkschlüssel, aktivierbar. Alternativ oder zusätzlich kann die Vorrichtung auch automatisch in Abhängigkeit von einem oder mehreren Kriterien aktiviert werden. Insbesondere wird die Vorrichtung dabei automatisch bei einem Wechsel des Kraftfahrzeugs in einen neuen, durch die Vorrichtung anzuzeigenden Zustand aktiviert, z.B. beim Wechsel vom verriegelten in den entriegelten Zustand oder umgekehrt.

Neben der oben beschriebenen Vorrichtung umfasst die Erfindung ferner ein Kraftfahrzeug, welches eine oder mehrere der erfindungsgemäßen Vorrichtungen bzw. eine oder mehrere bevorzugte Varianten der erfindungsgemäßen Vorrichtung umfasst.

Ausführungsbeispiele der Erfindung werden nachfolgend anhand der beigefügten Figuren detailliert beschrieben.

Es zeigen:
- Fig. 1: eine Schnittansicht durch einen Teil der Innenverkleidung einer Tür eines Kraftfahrzeugs, aus der eine Ausführungsform der erfindungsgemäßen Vorrichtung ersichtlich ist; und
- Fig. 2: eine Draufsicht auf die Innenverkleidung der Tür des Kraftfahrzeugs aus Fig. 1.

Nachfolgend wird die Erfindung anhand einer Ausführungsform beschrieben, welche über ein Symbol in der Seitenscheibe der Tür eines Kraftfahrzeugs dessen Verriegelungszustand anzeigt. Die hierzu verwendete lichttechnische Einrichtung ist in der Innenverkleidung der Kraftfahrzeugtür integriert.

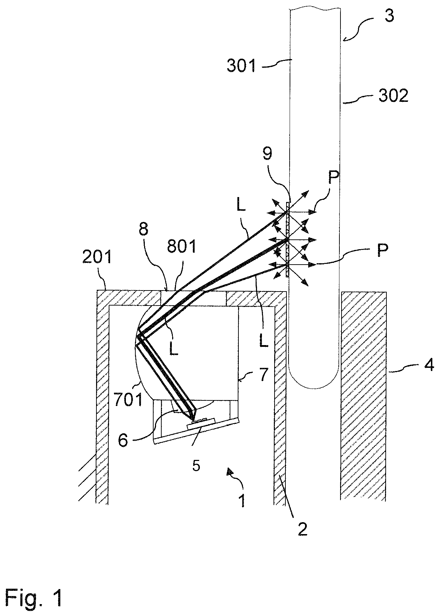

Fig. 1 zeigt in Schnittansicht den oberen Teil der Innenverkleidung der Tür. Die Innenverkleidung ist dabei mit dem Bezugszeichen 2 bezeichnet und in deren Innerem ist eine Leuchteinrichtung 1 vorgesehen. Ferner ist die Seitenscheibe 3 des Kraftfahrzeugs ersichtlich, die zwischen der Innenverkleidung 2 und der äußeren Karosserie 4 des Kraftfahrzeugs angeordnet ist. Die Seitenscheibe weist eine zum Innenraum des Kraftfahrzeugs gerichtete Innenfläche 301 sowie eine zur Außenseite des Kraftfahrzeugs und damit zum Außenraum des Fahrzeugs gerichtete Außenfläche 302 auf. In der Ausführungsform der Fig. 1 umfasst die Leuchteinrichtung 1 im unteren Teil eine Lichtquelle in der Form einer RGB-Leuchtdiode 5, mit der verschiedene Leuchtfarben über entsprechende optische Halbleiter erzeugt werden können. In einer abgewandelten Variante der Erfindung kann anstatt einer RGB-LED auch eine einfarbige LED eingesetzt werden.

Der Strahlengang des durch die LED 5 erzeugten Lichts ist in Fig. 1 durch entsprechende Linien L angedeutet. Das Licht der LED 5 fällt auf eine Kollimationsoptik 6 in der Form einer Kollimationslinse, welche ein im Wesentlichen paralleles Strahlbündel erzeugt, das anschließend in einen Lichtleiter 7 eintritt, der z.B. als Prisma ausgestaltet sein kann. Über eine entsprechende Formgebung der Innenfläche 701 des Lichtleiters 7 wird eine Totalreflexion der über die Kollimationsoptik kollimierten Lichtstrahlen bewirkt, so dass diese schräg nach oben abgelenkt werden. Die Strahlen treten dann über einen Lichtaustritt in der Form einer transparenten Scheibe 8 mit planarer Austrittsfläche 801 aus der Leuchteinrichtung 1 aus. Die Scheibe 8 ist dabei in der oberen Kante 201 der Innenverkleidung 2 angeordnet. Über eine (nicht gezeigte) Halteeinrichtung wird die Leuchteinrichtung in der in Fig. 1 gezeigten Position gehalten. Gegebenenfalls kann ferner auf der Kante 201 der Innenverkleidung 2 vor dem Lichtaustritt 8 eine Blende vorgesehen sein, welche derart ausgestaltet ist, dass sie einen Bereich des Lichtaustritts abdeckt, über den keine oder nur wenig Lichtstrahlen aus der Austrittsfläche 801 austreten.

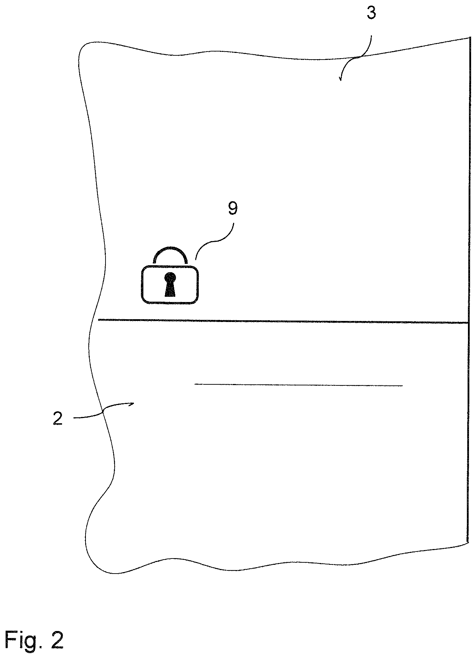

Die Lichtstrahlen treffen nach Austritt aus der Austrittsfläche 801 auf die Innenfläche 301 der Seitenscheibe 3. Dabei ist auf der Innenfläche 301 ein Symbol 9 in der Form einer aufgebrachten Struktur ausgebildet, welche eine Streuung der darauf auftreffenden Lichtstrahlen sowohl hin zum Innenraum als auch zum Außenraum des Fahrzeugs bewirkt, wie durch entsprechende Pfeile angedeutet ist, die aus Übersichtlichkeitsgründen nur zum Teil mit dem Bezugszeichen P versehen sind. Das Symbol 9 ist nochmals näher aus Fig. 2 ersichtlich, welche eine Draufsicht auf die Tür der Fig. 1 vom Innenraum aus zeigt. Das Symbol stellt ein Schloss dar, das zur Anzeige des Verriegelungszustands des Fahrzeugs genutzt wird. Das Schlosssymbol ist in Längsrichtung des Fahrzeugs am hinteren Ende der Tür in einem Bereich angeordnet, an dem herkömmlicherweise der Türknopf positioniert ist. Es dient somit als Ersatz für diesen Türknopf.

In der Ausführungsform der Fig. 1 ist die Struktur des Symbols 9 durch einen teiltransparenten Lack gebildet, der auf die Innenfläche 301 der Seitenscheibe 3 durch Siebdruck aufgebracht ist. Die Pigmente im Lack bewirken dabei die Lichtstreuung. Zum Beispiel wird eine Mischung aus einem weißen Lack und einem farblosen Lack verwendet. Zur Ausbildung der Struktur des Symbols kann in abgewandelten Ausführungsformen ggf. auch Ätzen, Sandstrahlen, Gravieren (z.B. mittels eines Lasers) oder auch andere Verfahren eingesetzt werden, welche eine Aufrauhung der Innenfläche der Fahrzeugscheibe mit der daraus resultierenden Streuwirkung bewirken. Bei ausgeschalteter Leuchteinrichtung ist das Symbol 9 auf der Scheibe 3 nicht bzw. nur schwer zu erkennen. Zur Anzeige des Verriegelungszustands wird die LED 5 der Leuchteinrichtung 1 eingeschaltet, woraufhin die Lichtstrahlen L auf das Symbol 9 fallen, dessen Struktur eine Lichtstreuung und damit ein Aufleuchten des Symbols (d.h. eine visuell wahrnehmbare Erhellung des Symbols) bewirken.

In der hier beschriebenen Ausführungsform wird durch die LED 5 im Falle der Verriegelung des Fahrzeugs rotes Licht erzeugt, so dass das Symbol 9 rot aufleuchtet. Demgegenüber wird im entriegelten Zustand des Fahrzeugs durch die LED 5 grünes Licht erzeugt, so dass das Symbol grün aufleuchtet. Auch andere Farbkombinationen für die Anzeige des entsprechenden verriegelten bzw. entriegelten Zustands sind möglich. Ebenso können andere Symbole als ein Schloss auf die Scheibe aufgebracht werden, wie z.B. ein Schlüssel oder andere Arten von Piktogrammen.

Um ein homogenes Ausleuchten des Symbols 9 zu bewirken, ist in einer abgewandelten Ausführungsform die Austrittsfläche 801 diffus streuend ausgestaltet, was z.B. über ein Sandstrahlen dieser Fläche bewirkt werden kann. In einer weiteren Abwandlung ist die Austrittsfläche 801 transparent und nach Art einer Linse derart geformt, dass ein Lichtkegel mit homogener Lichtverteilung erzeugt wird, der dann auf das Symbol fällt. Die Formung der Austrittsfläche zur Ausbildung eines homogenen Lichtkegels liegt dabei im Rahmen von fachmännischem Handeln. Um eine gute Sichtbarkeit des angeleuchteten Symbols sowohl bei Tag als auch bei Nacht zu gewährleisten, kann ferner die Intensität des Lichts der Leuchteinrichtung 1 in Abhängigkeit von der Umgebungshelligkeit um das Fahrzeug angepasst werden, wobei die Umgebungshelligkeit über einen entsprechenden Sensor gemessen wird. Bei höherer Umgebungshelligkeit wird die Lichtintensität erhöht, so dass das Symbol auch bei Tag gut sichtbar bleibt. Bei niedriger Umgebungshelligkeit wird die Lichtintensität verringert und dadurch eine von der Leuchteinrichtung bzw. dem Symbol ausgehende Blendung vermieden.

Die Ansteuerung der Leuchteinrichtung 1 kann je nach Ausgestaltung auf verschiedene Weise erfolgen. Insbesondere kann das Aufleuchten des Symbols 9 über die Bedienung eines Funkschlüssels des Fahrzeugs bewirkt werden. Mit anderen Worten wird das Aufleuchten des Symbols zur Anzeige des Verriegelungszustands dann bewirkt, wenn der Fahrer das Fahrzeug über den Funkschlüssel verriegelt, wohingegen das Aufleuchten des Symbols zur Anzeige des Entriegelungszustands dann bewirkt wird, wenn der Fahrer das Fahrzeug über den Funkschlüssel entriegelt. Nach Verriegelung bzw. Entriegelung wird der entsprechende Zustand des Fahrzeugs für eine gewisse Zeit über das Symbol visualisiert. Beispielsweise kann das Symbol eine bestimmte Zeitperiode blinken oder es kann auch eine bestimmte Zeitperiode permanent leuchten. Das Blinken bzw. Aufleuchten des Symbols wird üblicherweise für eine Zeitspanne von ca. 10 Sekunden bis 60 Sekunden ausgelöst. Gegebenenfalls kann auch ein Aufdimmen bzw. Abdimmen des Symbols mittels der Leuchteinrichtung bewirkt werden.

Sobald der Fahrer mit dem Funkschlüssel den Verriegelungs- bzw. Entriegelungsvorgang wiederholt oder zwischen dem verriegelten und entriegelten Zustand wechselt, wird ein erneutes Aufleuchten des Symbols ausgelöst. Gegebenenfalls kann das Aufleuchten des Symbols auch an eine automatische Türverriegelung bzw. Türentriegelung gekoppelt sein. Oftmals wird beim Losfahren nach einer bestimmten Zeitspanne automatisch das Verriegeln der Türen bewirkt. Gekoppelt an diese automatische Verriegelung erfolgt dann ein Aufleuchten des Symbols.

Die im Vorangegangenen beschriebene Ausführungsform der Erfindung weist eine Reihe von Vorteilen auf. Es wird eine verbesserte visuelle Darstellung des Fahrzeugzustands und insbesondere des Verriegelungs- bzw. Entriegelungszustands über das Aufleuchten eines Symbols in der Fahrzeugscheibe bewirkt. Der Fahrzeugzustand ist dabei besser erkennbar als über einen Verschlussknopf, der zudem ein mechanisches Gestänge benötigt, auf das in der erfindungsgemäßen Vorrichtung verzichtet werden kann, was zu einer Gewichtseinsparung führt. Darüber hinaus wird auch bei Nacht eine gute Wahrnehmung des Fahrzeugzustands gewährleistet. Zudem ermöglicht die Erfindung eine hohe Individualisierung der Anzeige des Fahrzeugzustands, indem verschiedene Farben zur Anzeige des Symbols bzw. unterschiedliche Arten von Symbolen eingesetzt werden. Ferner gewährleistet der Lichtaustritt an der oberen Kante der Innenverkleidung, dass das Anschalten der Leuchteinrichtung auch bei herabgelassener Scheibe für Personen innerhalb und außerhalb des Fahrzeugs sichtbar ist. Über die entsprechende Farbe des Lichts am Lichtaustritt können die Personen dann auch bei herabgelassener Scheibe den verriegelten bzw. entriegelten Zustand des Kraftfahrzeugs erkennen.

### Bezugszeichen liste

- 1: Leuchteinrichtung
- 2: Innenverkleidung
- 201: obere Kante der Innenverkleidung
- 3: Fahrzeugscheibe
- 301: Innenfläche der Fahrzeugscheibe
- 302: Außenfläche der Fahrzeugscheibe
- 4: Karosserie
- 5: LED
- 6: Kollimationslinse
- 7: Lichtleiter
- 701: Innenfläche des Lichtleiters
- 8: Lichtaustritt
- 801: Austrittsfläche
- 9: Symbol
- L: Lichtstrahlen
- P: Pfeile

## Patentansprüche

1. Vorrichtung zur Ausgabe einer optischen Information an einem Kraftfahrzeug, umfassend eine zur Anordnung im Innenraum des Kraftfahrzeugs vorgesehene Leuchteinrichtung (1) mit einer oder mehreren Lichtquellen (5) zur Erzeugung von Licht (L) und eine den Innenraum des Kraftfahrzeugs begrenzende Scheibe (3) mit einer zum Innenraum des Kraftfahrzeugs gerichteten Innenfläche (301) und einer zur Außenseite des Kraftfahrzeugs gerichteten Außenfläche (302), wobei an der Scheibe (3) ein Symbol (9) ausgebildet ist, das eine Struktur zur Lichtstreuung zumindest in den Innenraum des Kraftfahrzeugs aufweist, wobei die Leuchteinrichtung (1) und das Symbol (9) derart zueinander angeordnet sind, dass das Licht (L) der Leuchteinrichtung (1) in deren Betrieb zumindest zum Teil ausgehend vom Innenraum des Kraftfahrzeugs über die Innenfläche (301) der Scheibe (3) auf das Symbol (9) fällt, welches aufgrund der Lichtstreuung an seiner Struktur aufleuchtet, **dadurch gekennzeichnet, dass**
die Scheibe (3) des Kraftfahrzeugs eine Seitenscheibe in einer Tür des Kraftfahrzeugs ist und die Leuchteinrichtung (1) in einer Innenverkleidung (2) der Tür des Kraftfahrzeugs vorgesehen ist, wobei das Licht (L) der Leuchteinrichtung (1) über eine Öffnung in einer oberen Kante (201) der Innenverkleidung (2) aus der Leuchteinrichtung (1) austritt.

2. Vorrichtung nach Anspruch 1, **dadurch gekennzeichnet, dass** die Leuchteinrichtung (1) als Lichtquellen (5) eine oder mehrere Halbleiterdioden, insbesondere eine oder mehrere LEDs, umfasst.

3. Vorrichtung nach Anspruch 1 oder 2, **dadurch gekennzeichnet, dass** die Lichtquelle (5) oder Lichtquellen (5) Licht in mehreren Farben erzeugen können.

4. Vorrichtung nach einem der vorhergehenden Ansprüche, **dadurch gekennzeichnet, dass** die Vorrichtung bei deren Aktivierung einen oder mehrere Zustände des Kraftfahrzeugs über das Aufleuchten des Symbols (9) anzeigt, wobei der oder die Zustände vorzugsweise den verriegelten Zustand und/oder den entriegelten Zustand der Kraftfahrzeugs umfassen.

5. Vorrichtung nach Anspruch 3 und 4, **dadurch gekennzeichnet, dass** unterschiedliche Zustände des Kraftfahrzeugs durch verschiedene Farben des Lichts (L) der Lichtquelle (5) oder Lichtquellen (5) angezeigt werden.

6. Vorrichtung nach einem der vorhergehenden Ansprüche, **dadurch gekennzeichnet, dass** die Leuchteinrichtung (1) eine optische Einrichtung (6, 7, 8) umfasst, die das Licht der Lichtquelle (5) oder Lichtquellen (5) zumindest zum Teil auf das Symbol (9) richtet.

7. Vorrichtung nach einem der vorhergehenden Ansprüche, **dadurch gekennzeichnet, dass** die optische Einrichtung (6, 7, 8) eine Kollimationsoptik (6) zur Strahlbündelung zumindest eines Teils des Lichts (L) der Lichtquelle (5) oder Lichtquellen (5) und/oder ein Reflexionselement (7) zur Ablenkung zumindest eines Teils des Lichts (L) der Lichtquelle (5) oder Lichtquellen (5) hin zu dem Symbol (9) mittels Reflexion umfasst.

8. Vorrichtung nach. Anspruch 7, **dadurch gekennzeichnet, dass** das Reflexionselement (7) durch einen Lichtleiter gebildet ist, der über Totalreflexion an seiner Innenfläche (701) das Licht (L) der Lichtquelle (5) oder Lichtquellen (5) zumindest zum Teil hin zu dem Symbol (9) ablenkt.

9. Vorrichtung nach einem der vorhergehenden Ansprüche, **dadurch gekennzeichnet, dass** die Leuchteinrichtung (1) eine Austrittsfläche (801) aufweist, über die das Licht (L) der Lichtquelle (5) oder Lichtquellen (5) zumindest zum Teil die Leuchteinrichtung (1) verlässt, wobei die Austrittsfläche (801) transparent und/oder lichtstreuend ist.

10. Vorrichtung an Anspruch 9, **dadurch gekennzeichnet, dass** die Austrittsfläche transparent (801) und derart geformt ist, dass das hierüber austretende Licht (L) der Lichtquelle (5) oder Lichtquellen (5) einen Lichtkegel mit im Wesentlichen homogener Lichtverteilung darstellt.

11. Vorrichtung nach einem der vorhergehenden Ansprüche, **dadurch gekennzeichnet, dass** die die Struktur des Symbols (9) auch eine Lichtstreuung zur Außenseite des Kraftfahrzeugs bewirkt.

12. Vorrichtung nach einem der vorhergehenden Ansprüche, **dadurch gekennzeichnet, dass** das Symbol (9) auf der Innenfläche (301) der Scheibe (3) aufgebracht ist.

13. Vorrichtung nach einem der vorhergehenden Ansprüche, **dadurch gekennzeichnet, dass** die Struktur des Symbols (9) einen auf die Scheibe (3) aufgebrachten Lack umfasst, wobei der Lack vorzugsweise transparent oder teiltransparent ist und insbesondere eine M ischung aus einem weißen und einem durchsichtigen Lack umfasst.

14. Vorrichtung nach einem der vorhergehenden Ansprüche, **dadurch gekennzeichnet, dass** die Struktur des Symbols (9) durch Gravur und/oder Ätzen und/oder Sandstrahlen der Scheibe (3) ausgebildet ist.

15. Vorrichtung nach einem der vorhergehenden Ansprüche, **dadurch gekennzeichnet, dass** ein Sensor zur Messung der Umgebungshelligkeit vorgesehen ist und die Lichtintensität des Lichts (L) der Leuchteinrichtung (1) in Abhängigkeit von der gemessenen Umgebungshelligkeit umso höher eingestellt wird, je größer die Umgebungshelligkeit ist.

16. Vorrichtung nach einem der vorhergehenden Ansprüche, **dadurch gekennzeichnet, dass** die Vorrichtung bei deren Aktivierung ein zeitweises Blinken des Symbols (9) und/oder ein zeitweises durchgängiges Leuchten des Symbols (9) bewirkt.

17. Vorrichtung nach einem der vorhergehenden Ansprüche, **dadurch gekennzeichnet, dass** die Vorrichtung manuell durch einen Benutzer, insbesondere über einen Fahrzeugschlüssel, aktivierbar ist und/oder automatisch in Abhängigkeit von einem oder mehreren Kriterien aktiviert wird.

18. Vorrichtung nach Anspruch 17 in Kombination mit Anspruch 4, **dadurch gekennzeichnet, dass** die Vorrichtung automatisch bei einem Wechsel des Kraftfahrzeugs in einen neuen, durch die Vorrichtung anzuzeigenden Zustand aktiviert wird.

19. Kraftfahrzeug, **dadurch gekennzeichnet, dass** das Kraftfahrzeug eine oder mehrere Vorrichtungen nach einem der vorhergehenden Ansprüche umfasst.

## Claims

1. A device for issuing visual information to a motor vehicle, comprising an illumination means (1) intended to be arranged in the interior of the motor vehicle with one or more light sources (5) for producing light (L), and a pane (3) delimiting the interior of the motor vehicle with an inner face (301) directed towards the interior of the motor vehicle and an outer face (302) directed towards the outer side of the motor vehicle, wherein a symbol (9) is formed on the pane (3) which has a structure for scattering light at least into the interior of the motor vehicle, wherein the illumination means (1) and the symbol (9) are arranged relative to each other in such a way that the light (L) from the illumination means (1) during the operation thereof at least partly, starting from the interior of the motor vehicle, across the inner face (301) of the pane (3) falls onto the symbol (9), which lights up on its structure due to the scattering of light, **characterised in that**
the pane (3) of the motor vehicle is a side window in a door of the motor vehicle, and the illumination means (1) is provided in an interior trim (2) of the door of the motor vehicle, the light (L) from the illumination means (1) emerging from the illumination means (1) via an opening in an upper edge (201) of the interior trim (2).

2. A device according to Claim 1, **characterised in that** the illumination means (1) comprises one or more semiconductor diodes, especially one or more LEDs, as light sources (5).

3. A device according to Claim 1 or Claim 2, **characterised in that** the light source (5) or light sources (5) can produce light in several colours.

4. A device according to one of the preceding claims, **characterised in that** the device upon its activation indicates one or more states of the motor vehicle by means of the lighting-up of the symbol (9), the state or states preferably comprising the locked state and/or the unlocked state of the motor vehicle.

5. A device according to Claim 3 and Claim 4, **characterised in that** different states of the motor vehicle are indicated by different colours of the light (L) of the light source (5) or light sources (5).

6. A device according to one of the preceding claims, **characterised in that** the illumination means (1) comprises an optical means (6, 7, 8) which directs the light from the light source (5) or light sources (5) at least partly onto the symbol (9).

7. A device according to one of the preceding claims, **characterised in that** the optical means (6, 7, 8) comprises collimation optics (6) for focusing the beam of at least part of the light (L) from the light source (5) or light sources (5), and/or a reflection element (7) for deflecting at least part of the light (L) from the light source (5) or light sources (5) towards the symbol (9) by means of reflection.

8. A device according to Claim 7, **characterised in that** the reflection element (7) is formed by a fibre-optic conductor which by means of total reflection on its inner face (701) deflects the light (L) from the light source (5) or light sources (5) at least partly towards the symbol (9).

9. A device according to one of the preceding claims, **characterised in that** the illumination means (1) has an exit face (801) via which the light (L) from the light source (5) or light sources (5) at least partly leaves the illumination means (1), the exit face (801) being transparent and/or light-scattering.

10. A device according to Claim 9, **characterised in that** the exit face (801) is transparent and formed in such a way that the light (L) from the light source (5) or light sources (5) which emerges therethrough represents a cone of light with a substantially homogeneous light distribution.

11. A device according to one of the preceding claims, **characterised in that** the structure of the symbol (9) also brings about scattering of light to the outer side of the motor vehicle.

12. A device according to one of the preceding claims, **characterised in that** the symbol (9) is applied to the inner face (301) of the pane (3).

13. A device according to one of the preceding claims, **characterised in that** the structure of the symbol (9) comprises a paint applied to the pane (3), the paint being preferably transparent or partially transparent and comprising especially a mixture of a white and a transparent paint.

14. A device according to one of the preceding claims, **characterised in that** the structure of the symbol (9) is formed by engraving and/or etching and/or sandblasting the pane (3).

15. A device according to one of the preceding claims, **characterised in that** a sensor for measuring the ambient brightness is provided, and the light intensity of the light (L) from the illumination means (1), as a function of the measured ambient brightness is set all the higher, the greater the ambient brightness.

16. A device according to one of the preceding claims, **characterised in that** the device upon its activation brings about temporary blinking of the symbol (9) and/or temporary continuous emission of light by the symbol (9).

17. A device according to one of the preceding claims, **characterised in that** the device can be activated manually by a user, especially by means of a vehicle key, and/or is activated automatically dependent on one or more criteria.

18. A device according to Claim 17 in combination with Claim 4, **characterised in that** the device is activated automatically upon the motor vehicle changing into a new state which is to be indicated by the device.

19. A motor vehicle, **characterised in that** the motor vehicle comprises one or more devices according to one of the preceding claims.

## Revendications

1. Dispositif permettant de délivrer une information optique dans un véhicule comprenant un dispositif d'éclairage (1) destiné à être monté dans l'habitacle du véhicule et comportant au moins une source de lumière (5) permettant de produire de la lumière (L), et une vitre (3) délimitant l'habitacle du véhicule et ayant une surface interne (301) orientée vers l'habitacle du véhicule et une surface externe (302) orientée vers le côté externe du véhicule, sur la vitre (3) étant formé un symbole (9) comportant une structure permettant de diffuser la lumière au moins dans l'habitacle du véhicule, le dispositif d'éclairage (1) et le symbole (9) étant positionnés l'un par rapport à l'autre de sorte que la lumière (L) du dispositif d'éclairage (1) tombe lors de son fonctionnement au moins en partie, à partir de l'habitacle du véhicule, et en passant sur la surface interne (301) de la vitre (3) sur le symbole (9) qui, en raison de la dispersion de la lumière sur sa structure s'éclaire, **caractérisé en ce que**
la vitre (3) du véhicule est une vitre latérale située dans une porte du véhicule et le dispositif d'éclairage (1) est monté dans l'habillage interne (2) de la porte du véhicule, la lumière (L) du dispositif d'éclairage (1) sortant de ce dispositif par une ouverture du bord supérieur (201) de l'habillage interne (2).

2. Dispositif conforme à la revendication 1,
**caractérisé en ce que**
le dispositif d'éclairage (1) comporte en tant que source de lumière (5) au moins une diode semi-conductrice, en particulier au moins une LED.

3. Dispositif conforme à la revendication 1 ou 2,
**caractérisé en ce que**
la ou les source(s) de lumière (5) peut(vent) produire de la lumière de différentes couleurs.

4. Procédé conforme à l'une des revendications précédentes,
**caractérisé en ce que**
lors de son activation, le dispositif indique un ou plusieurs état(s) du véhicule par l'éclairage du symbole (9), le ou les état(s) étant de préférence l'état verrouillé et/ou l'état déverrouillé du véhicule.

5. Dispositif conforme à la revendication 3 ou 4,
**caractérisé en ce que**
différents états du véhicule sont indiqués par différentes couleurs de la lumière (L) de la ou des source(s) de lumière (5).

6. Dispositif conforme à l'une des revendications précédentes,
**caractérisé en ce que**
le dispositif d'éclairage (1) comporte un dispositif optique (6, 7, 8) qui dirige la lumière de la ou des source(s) de lumière (5) au moins en partie sur le symbole (9).

7. Dispositif conforme à l'une des revendications précédentes,
**caractérisé en ce que**
le dispositif optique (6, 7, 8) est une optique de collimation (6) permettant de rassembler en un faisceau au moins une partie de la lumière (L) de la ou des source(s) de lumière (5) et/ou un élément réflecteur (7) permettant de dévier par réflexion au moins une partie de la lumière (L) de la ou des source(s) de lumière (5) vers le symbole (9).

8. Dispositif conforme à la revendication 7,
**caractérisé en ce que**
l'élément réflecteur (7) est formé par un guide de lumière qui dévie la lumière (L) de la ou des source(s) de lumière (5) par réflexion totale sur sa surface interne (701) au moins en partie vers le symbole (9).

9. Dispositif conforme à l'une des revendications précédentes,
**caractérisé en ce que**
le dispositif d'éclairage (1) comporte une surface de sortie (801) par l'intermédiaire de laquelle la lumière (L) de la ou des source(s) de lumière (5) sort au moins en partie de ce dispositif d'éclairage (1), la surface de sortie (801) étant transparente et/ou susceptible de diffuser la lumière.

10. Dispositif conforme à la revendication 9,
**caractérisé en ce que**
la surface de sortie (801) est transparente et réalisée de sorte que la lumière de la ou des source(s) de lumière (5) qui en sort définisse un cône lumineux ayant une distribution de lumière essentiellement homogène.

11. Dispositif conforme à l'une des revendications précédentes,
**caractérisé en ce que**
la structure du symbole (9) diffuse également la lumière vers le côté externe du véhicule.

12. Dispositif conforme à l'une des revendications précédentes,
**caractérisé en ce que**
le symbole (9) est monté sur la surface interne (301) de la vitre (3).

13. Dispositif conforme à l'une des revendications précédentes,
**caractérisé en ce que**
la structure du symbole (9) comporte un vernis appliqué sur la vitre (3), le vernis étant de préférence transparent ou partiellement transparent et renfermant en particulier un mélange d'un vernis blanc et d'un vernis transparent.

14. Dispositif conforme à l'une des revendications précédentes,
**caractérisé en ce que**
la structure du symbole (9) est formée par gravure et/ou attaque chimique et/ou sablage de la vitre (3).

15. Dispositif conforme à l'une des revendications précédentes,
**caractérisé en ce qu'**
il est prévu un capteur permettant de mesurer la luminosité ambiante, et l'intensité de la lumière (L) du dispositif d'éclairage (1) est réglée en fonction de la luminosité ambiante mesurée de sorte qu'elle soit d'autant plus grande que la luminosité ambiante est importante.

16. Dispositif conforme à l'une des revendications précédentes,
**caractérisé en ce que**
lors de son activation le dispositif provoque un clignotement intermittent du symbole (9) et/ou un éclairage continu intermittent du symbole (9).

17. Dispositif conforme à l'une des revendications précédentes,
**caractérisé en ce qu'**
il peut être activé manuellement par un utilisateur, en particulier par une clef du véhicule et/ou automatiquement en fonction d'un ou de plusieurs critère(s).

18. Dispositif conforme à la revendication 17, combinée à la revendication 4,
**caractérisé en ce qu'**
il est activé automatiquement lors d'un passage du véhicule dans un nouvel état devant indiqué par ce dispositif.

19. Véhicule **caractérisé en ce qu'**
il comporte au moins un dispositif conforme à l'une des revendications précédentes.
